# EUROPÄISCHE PATENTSCHRIFT

(11) **EP 1 554 030 B1**
(45) Veröffentlichungstag und Bekanntmachung des Hinweises auf die Patenterteilung: **25.04.2007**
(21) Anmeldenummer: 03790736.7
(22) Anmeldetag: 22.08.2003
(51) Int. Cl.: B01D 35/26, A01K 63/04

(54) **TEICHFILTER MIT VORFILTEREINHEIT**
POOL FILTER WITH A PRE-FILTERING UNIT
FILTRE POUR PLANS D'EAU PRESENTANT UNE UNITE DE PREFILTRATION

(30) Priorität: 30.08.2002 DE 10240454
(43) Veröffentlichungstag der Anmeldung: 20.07.2005
(73) Patentinhaber: Oase GmbH, 48477 Hörstel (DE)
(72) Erfinder: HOFFMEIER, Dieter, 49479 Ibbenbüren (DE)
(74) Vertreter: Meissner, Peter E.
(86) Internationale Anmeldenummer: PCT/DE2003/002807
(87) Internationale Veröffentlichungsnummer: WO 2004/020343

(56) Entgegenhaltungen:
- EP-A- 0 958 850
- EP-B- 0 552 594
- WO-A-01/16034
- DE-A- 2 522 325
- GB-A- 2 146 255
- GB-A- 2 307 421
- GB-A- 2 367 506
- GB-A- 2 371 244

## Beschreibung

Die vorliegende Erfindung betrifft einen Teichfilter mit einem Gehäuse, das an einer Bodenseite auf einem Untergrund abstützbar ist, eine Längsachse und eine Querachse aufweist und in dessen Gehäusewand ein Wasser-Einlass, ein Kanal-Auslass und ein Teich-Auslass ausgebildet sind, wobei in dem Gehäuse im Filterbetrieb ein Strömungsweg von dem Wasser-Einlass zum Teich-Auslass ausgebildet und in dem Strömungsweg eine Filtereinrichtung angeordnet ist, der eine Vorfiltereinheit vorgeschaltet ist, die ein flächig ausgebildetes Filtersieb umfasst.

Ein solcher Teichfilter ist aus der GB 2 371 244 A bekannt. Dieser Teichfilter weist eine Filtereinrichtung mit einem Filtersieb auf, das zylinderförmig senkrecht zu einer Querachse und eine Längsachse angeordnet ist.

Regelmäßig wird ein solcher Teichfilter auf den Boden eines Teiches gestellt und ist einer Pumpe nachgeordnet, die Wasser zur Reinigung in den Teichfilter pumpt. In dem Teichfilter ist eine Filtereinheit angeordnet, die das in dem zu reinigenden Wasser enthaltene Schwebematerial auffängt und unter Umständen auch durch Hinzufügung von Filterhilfsmitteln eine biologische Reinigung durchführt. Das gereinigte Wasser tritt dann an einem Teich-Auslass wieder in den Teich aus. Es ist auch bekannt, dass ein solcher Teichfilter ein Kanal-Auslass aufweist, durch den Wasser austritt, wenn der Teichfilter im Spülbetrieb gereinigt wird.

Es hat sich aber gezeigt, dass die Filtereinheit in einem vorbeschriebenen Filterbetrieb relativ schnell zugesetzt ist, obwohl das von einer Pumpe kommende Wasser an der Pumpe durch ein Filtersieb grob gereinigt wurde. Die Folge davon ist, dass der Filterbetrieb relativ häufig zur Reinigung der Filtereinheit unterbrochen werden muss. Auch die häufige Reinigung der Filtereinheit ist mit Unannehmlichkeiten verbunden, da zu diesem Zweck der Teichfilter aus dem Teich entnommen werden muss.

Die Aufgabe der vorliegenden Erfindung ist daher, einen Teichfilter zu schaffen, dessen Filtereinheit sich weniger schnell zusetzt, so dass eine Reinigung in relativ großen Zeitabständen erforderlich ist.

Die Aufgabe wird erfindungsgemäß dadurch gelöst, dass das Filtersieb parallel zur Querachse und in einem Winkel zur Längsachse angeordnet ist, derart, dass das Filtersieb ein bodennahes Ende und ein bodenfernes Ende aufweist, und dass das vom Wasser-Einlass einströmende Wasser auf das bodenferne Ende des Filtersiebes auftrifft.

Die Anordnung einer Vorfiltereinheit hat den Vorteil, das Schwebeteilchen von vorbestimmter Größe, zum Beispiel von Größe 100 bis 250 µm, aufgefangen werden können und nicht in die eigentliche Filtereinheit gelangen.

Ein weiterer Vorteil der vorliegenden Erfindung liegt darin, dass die Vorfiltereinheit ein flächig ausgebildetes Filtersieb umfasst. Ein flächiges Filtersieb kann in Abhängigkeit vom zu reinigenden Wasser mit vorbestimmten Filteröffnungen versehen werden.

Ein weiterer Vorteil besteht darin, dass das Filtersieb parallel zur Querachse und in einem Winkel zur Längsachse angeordnet ist, derart, dass das Filtersieb ein bodennahes und ein bodenfernes Ende aufweist. Durch eine solche schräge Raumlage im Strömungsweg gelangt das Wasser durch Sieböffnungen hindurch und schiebt durch seine Strömung das auf dem Filtersieb aufgefangene Filtergut allmählich zum bodennahen Ende hin. Dadurch wird auch das Filtersieb der Vorfiltereinheit in einem großen Bereich relativ lange frei von Verunreinigungen gehalten.

Ein weiterer Vorteil der vorliegenden Erfindung liegt darin, dass die Vorfiltereinheit eine Steuereinrichtung aufweist, die zwischen dem Wasser-Einlass und dem Filtersieb im Strömungsweg angeordnet ist. In einer solchen Steuereinrichtung lässt sich das einströmende Wasser auf das Filtersieb steuern.

Ein weiterer Vorteil der vorliegenden Erfindung ist, dass die Steuereinrichtung parallel zur Querachse angeordnet ist und eine Strömungskammer bildet, die wenigstens eine Austrittsöffnung oberhalb des bodenfernen Endes des Filtersiebes aufweist, derart, dass einströmendes Wasser auf das bodenferne Ende des Filtersiebes auftrifft und auf der schrägen Filterfläche in Richtung bodennahem Ende fliesst und in Abhängigkeit von der Schwerkraft durch Filteröffnungen in dem Filtersieb nach unten in die Filtereinheit strömt. Durch die Anordnung von wenigstens einer Austrittsöffnung oberhalb des bodenfernen Endes wird das einströmende Wasser tangential auf das Filtersieb gelenkt, so dass eine bessere Schubwirkung auf gegebenenfalls auf dem Filtersieb anhaftendes Filtergut ausgeübt wird.

Ein weiterer Vorteil der vorliegenden Erfindung besteht darin, dass die Strömungskammer wenigstens ein Umsteuerelement aufweist, das jeweils einer Austrittsöffnung zugeordnet ist. Mit einem Umsteuerelement kann der Strömungsweg des einströmenden Wasser auf einen Bereich des Filtersiebes konzentriert werden, wodurch sich der Druck des einströmenden Wasser in diesem Bereich erhöht und zu einer Spülwirkung auf dem Filtersieb führt. Weitere Vorteile ergeben sich aus den Merkmalen der weiteren Unteransprüche.

Eine Ausführungsform der vorliegenden Erfindung wird im folgenden anhand der Zeichnungen näher beschrieben. Es zeigen:
Fig. 1 eine schematische Seitenansicht im Längsschnitt durch einen erfindungsgemäßen Teichfilter;
Fig. 2 eine schematische Draufsicht auf den Teichfilter aus Fig. 1 mit abgenommenem Deckel, damit die Filtereinheit sichtbar wird und mit teilweise aufgebrochener Filtereinheit, um die darunter liegende Filtereinheit sichtbar zu machen.

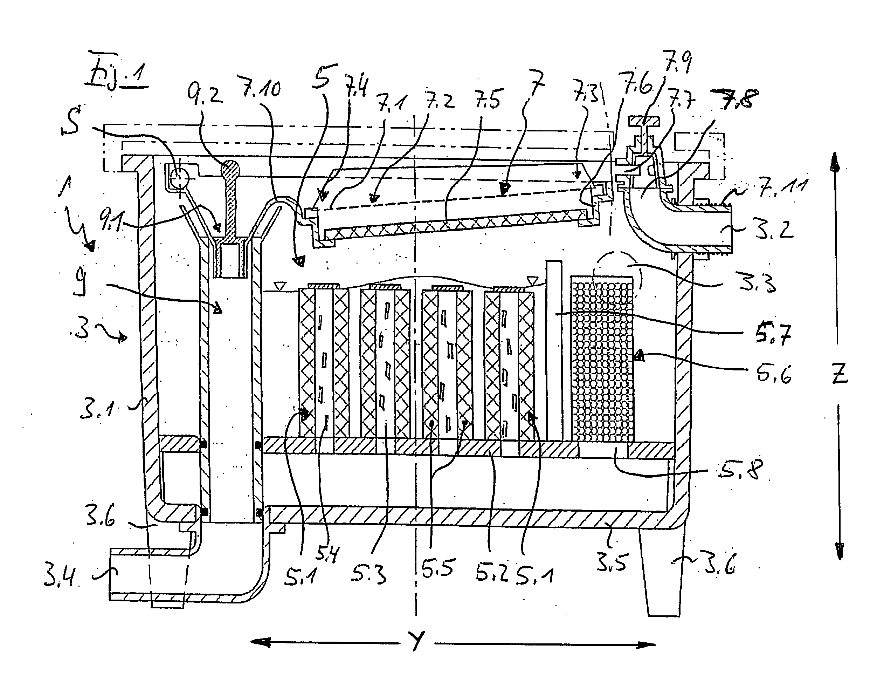

In Fig. 1 ist schematisch eine Seitenansicht im Längsschnitt eines Teichfilters 1 dargestellt. Der Teichfilter 1 weist ein Gehäuse 3 auf mit einer Gehäusewand 3.1 in der ein Wasser-Einlass 3.2, ein Teich-Auslass 3.3 und ein Kanal-Auslass 3.4 ausgebildet ist. In einem Filterbetrieb ist in dem Gehäuse 3 ein Strömungsweg ausgebildet, der zwischen dem Wasser-Einlass 3.2 und dem Teich-Auslass 3.3 verläuft. Im einem Spülbetrieb ist in dem Gehäuse 3 ein Strömungsweg ausgebildet, der zwischen dem Wasser-Eingang 3.2 und dem Kanal-Auslass 3.4 verläuft.

Das Gehäuse 3 weist eine Querachse X und eine Längsachse Y auf. Eine Richtung senkrecht zur Längsachse Y und senkrecht zur Querachse X wird als Z-Richtung bezeichnet. Das Gehäuse 3 hat eine Bodenseite 3.5, an der Füße 3.6 ausgebildet sind, um das Gehäuse 3 auf einem Untergrund abzustützen. Der Wasser-Einlass 3.2 ist an einem bodenfernen Ende des Gehäuses 3 ausgebildet. Auch der Teich-Auslass 3.3 ist an einer bodenfernen Stelle des Gehäuses 3 ausgebildet. Der Kanal-Auslass 3.4 ist an einem bodennahen Ende des Gehäuses 3 ausgebildet.

In einem zentralen Bereich des Gehäuses 3 ist eine Filtereinheit 5 angeordnet. Die Filtereinheit 5 umfasst eine Mehrzahl von Filterpatronen 5.1, die im räumlichen Abstand zueinander angeordnet sind und sich in Z-Richtung von einer Halterung 5.2 aus erstrecken. Die Halterung 5.2 verläuft parallel zur Querachse X und parallel zur Längsachse Y. Jede Filterpatrone 5.1 weist einen zentralen Strömungskanal 5.3 auf der zu einem bodenfernen Ende hin verschlossen ist und seitliche Austrittsschlitze 5.4 aufweist um den zentralen Strömungskanal 5.3 herum ist ein poröses, permeables und komprimierbares Material 5.5 angeordnet. Mit einem geeigneten Werkzeug (nicht dargestellt) kann das Filtermaterial in Z-Richtung entlang des zentralen Strömungskanals 5.3 zusammengedrückt bzw. komprimiert werden um darin befindliches Filtergut im Spülbetrieb auszudrücken.

Zu der Filtereinheit 5 gehört optional auch eine Zusatzpatrone 5.6, die ein Filterhilfsmittel enthält, zum Beispiel Kohle, Zeolith, Lava, Biokerne oder dergl. Die Zusatzpatrone 5.6 kann, wie in der vorliegenden Ausführungsform, durch eine Zwischenwand 5.7 von den Filterpatronen 5.1 räumlich getrennt angeordnet sein. In anderen Ausführungsformen ist aber auch denkbar, einzelne Filterpatronen 5.1 durch eine Zusatzpatrone 5.6 zu ersetzen.

Zwischen der Bodenseite 3.5 und der Halterung 5.2 ist ein Strömungskanal ausgebildet, durch den das durch die Filterpatronen hindurchgegangene Wasser im Filterbetrieb in Richtung Teich-Auslass 3.3 strömen kann. In der vorliegenden Ausführungsform wird das Wasser dazu durch eine Öffnung 5.8 in Z-Richtung durch die Zusatzpatrone 5.6 zum obenliegenden Teich-Auslass 3.3 gedrückt.

Räumlich oberhalb der Filtereinheit 5 ist eine Vorfiltereinheit 7 angeordnet. Die Vorfiltereinheit 7 erstreckt sich parallel zur Querachse X und in einem Neigungswinkel zur Längsachse Y. Die Anordnung führt dazu, dass wie in Fig. 1 zu sehen ist, die Vorfiltereinheit auf der rechten Seite in Fig. 1 ein bodenfernes Ende und auf der entgegengesetzten Seite, in Fig. 1 im linken Bereich, ein bodennahes Ende aufweist. Der Neigungswinkel ist relativ klein.

Die Vorfiltereinheit umfasst ein Filtersieb 7.1, das aus einem beliebigen Material hergestellt sein kann, vorzugsweise aber aus Edelstahl ist. Das Filtersieb 7.1 hat Filteröffnungen, deren Größe frei wählbar ist. In der vorliegenden Ausführungsform haben die Filteröffnungen 7.2 eine Größe von 100 bis 250 µm. Das Filtersieb 7.1 hat ebenfalls ein bodenfernes Ende 7.3 und ein bodennahes Ende 7.4. Unterhalb des Filtersiebes 7.1 ist eine großporige Kunststoffmatte 7.5 angeordnet, durch die das durch das Filtersieb 7.1 hindurchgegangene Wasser hindurchrieselt und Sauerstoff zur Nitrifikation aufnehmen kann. Das Filtersieb 7.1 und die großporige Kunststoffmatte 7.5 sind in der Vorfiltereinheit 7 in einer Halterung 7.6 gelagert.

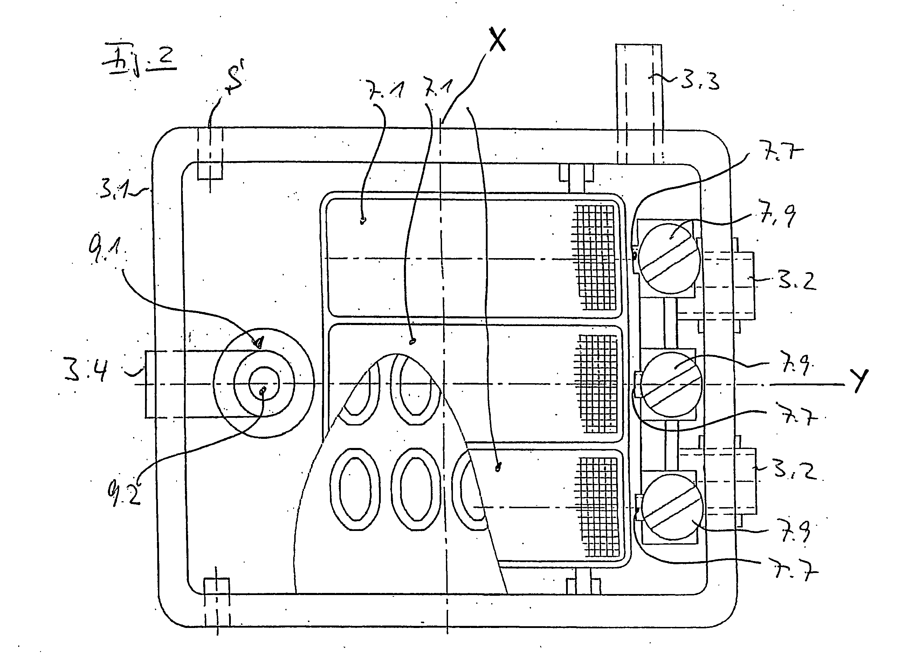

Die Vorfiltereinheit 7 umfasst zwischen dem Wasser-Einlass 3.2 und dem Filtersieb 7.1 eine Strömungskammer 7.8. Der Wasser-Einlass 3.2 in der Strömungskammer 7.8 kann ein- oder mehrteilig ausgebildet sein. In Fig. 2 sind zwei Eintrittsöffnungen 3.2 in die Strömungskammer 7.8 dargestellt. Die Strömungskammer 7.8 ist parallel zur Querachse X ausgebildet und erstreckt sich im wesentlichen über die Breite des Filtersiebes 7.1 in Richtung der Querachse X.

In der vorliegenden Ausführungsform ist das Filtersieb 7.1 dreiteilig ausgebildet, wie dies in Fig. 2 zu sehen ist. In anderen Ausführungsformen kann das Filtersieb 7.1 auch einteilig ausgebildet sein oder mehr als drei Teile aufweisen. Die Unterteilung des Filtersiebes 7.1 erfolgt parallel zur Längsachse Y, so dass drei längliche Filtersiebteile gebildet sind. In der Strömungskammer 7.8 sind Austrittsöffnungen 7.7 ausgebildet, die jeweils einem Teil des Filtersiebes 7.1 zugeordnet sind. Bei einem einteiligen Filtersieb 7.1 können aber ebenfalls mehrere Austrittsöffnungen 7.1 vorgesehen sein, die dann alle dem einteiligen Filtersieb 7.1 zugeordnet sind. Für die vorliegende Erfindung soll wenigstens eine Austrittsöffnung 7.7 einem Filtersiebteil zugeordnet sein.

Der Austrittsöffnung 7.7 ist jeweils ein Umsteuerelement 7.9 zugeordnet. Mit dem Umsteuerelement 7.9, das zum Beispiel ein Hahnküken sein kann, können bestimmte Austrittsöffnungen 7.7 verschlossen werden, um dadurch die Strömung des einströmenden Wassers auf bestimmte offene Austrittsöffnungen 7.7 zu konzentrieren. Zum Beispiel können in der Fig. 2 dargestellten Ausführungsform zwei Austrittsöffnungen 7.7 verschlossen werden, so dass die Strömung des einströmenden Wasser durch die dritte freie Austrittsöffnung 7.7 auf das entsprechende Filtersiebteil 7.1 strömen kann. Dadurch wird der Druck des tangential auf das Siebteil 7.1 auftreffenden Wassers um das Dreifache erhöht und eine Spülwirkung auf der Oberfläche des entsprechenden Siebteils 7.1 erzielt.

Aufgrund der schrägen Anordnung des Filtersiebes 7.1 drückt das Wasser das auf dem Filtersieb 7.1 aufgefangene Filtergut zum bodennahen Ende 7.4 hin. Das Wasser selbst dringt in Abhängigkeit von der Schwerkraft durch die Filteröffnungen 7.2 hindurch und rieselt durch die Kunststoffmatte 7.5, um in die eigentliche Filtereinheit 5 zu gelangen.

In dem Gehäuse 3 ist ein Spülkanal 9 in einer Z-Richtung ausgebildet. Der Spülkanal 9 steht in Wirkverbindung mit dem Kanal-Auslass 3.4. Der Spülkanal 9 hat eine Eintrittsöffnung 9.1. Zwischen der Eintrittsöffnung 9.1 und dem bodennahen Ende des Filtersiebes 7.4 ist ein Strömungshindernis 7.10 ausgebildet. Das Strömungshindernis 7.10 ist Teil der Halterung 7.6 und erstreckt sich parallel zur Querachse X über die gesamte Breite des Filtersiebes 7.1 und versperrt den Strömungsweg des einströmenden Wassers in Richtung der Längsachse Y während des normalen Filterbetriebes. In einem Spülbetrieb, bei welchem dass durch den Wassereinlass 3.2 einströmende Wasser auf eine Austrittsöffnung 7.7 konzentriert wird, kann der starke Wasserstrom das Hindernis 7.10 zusammen mit dem mitgenommenen Filtergut überwinden und zur Eintrittsöffnung 9.1 in den Spülkanal 9 gelangen. Im normalen Filterbetrieb ist die Eintrittsöffnung 9.1 durch ein Schließelement 9.2, wie zum Beispiel einen Stopfen, verschlossen. Dadurch ist gewährleistet, dass auch Wasser und Filtergut, das im normalen Filterbetrieb das Strömungshindernis 7.10 überwindet, in einer trichterförmigen Ausbildung der Halterung 7.6 gesammelt wird und nur im Spülbetrieb, nach Entnahme des Stopfens 9.2, durch den Spülkanal 9.1 aus dem Kanal-Auslass 3.4 austreten kann.

In der vorliegenden Ausführungsform ist die Halterung 7.6 an der Gehäusewand 3.1 um eine Schwenkachse S schwenkbar gelagert. In anderen Ausführungsformen kann die ganze Vorfiltereinheit 7 um die Schwenkachse S schwenkbar gelagert sein. Durch die schwenkbare Lagerung der Halterung 7.6 kann das Filtersieb 7.1 und die grobporige Kunststoffmatte 7.5 aus einer nahezu horizontalen Betriebsposition während des Filterbetriebs in eine im wesentlichen vertikale Position geschwenkt werden und umgekehrt. Die vertikale Position ist durch eine Punkt/Strichlinie schematisch in Fig. 1 angedeutet. Durch den Schwenkmechanismus kann in leichter Weise auf die unter der Vorfiltereinheit 7 liegende Filtereinheit 5 zugegriffen werden, wenn diese zum Beispiel gereinigt werden soll.

Die Wirkverbindung des Spülkanals 9 mit dem Kanal-Auslass 3.4 ist lösbar, so dass der Spülkanal 9 in Z-Richtung nach oben gezogen werden kann. Dadurch öffnet sich der bodenseitige Spülkanal zwischen der Halterung 5.2 und der Bodenseite 3.5 des Gehäuses 3 zum Kanal-Auslass 3.4 hin. In dieser Position (nicht dargestellt) des Spülkanals 9 kann auch die Filtereinheit 5 gespült werden, so dass der Strömungsweg nicht in Richtung des Teich-Auslasses 3.3 sondern in Richtung des Kanal-Auslasses 3.4 verläuft.

Die Spülkammer 7.8 der Vorfiltereinheit 7 kann auch einen Spülwasser- Schlauchanschluss 7.11 aufweisen. Der Spülkammer 7.8 kann auch eine UVC-Leuchte vorgeschaltet sein, die das zu reinigende Wasser bereits entkeimt.

## Patentansprüche

1. Teichfilter mit einem Gehäuse, das an einer Bodenseite auf einem Untergrund abstützbar ist, eine Längsachse (Y) und eine Querachse (X) aufweist und in dessen Gehäusewand ein Wasser-Einlass (3.2), ein Kanal-Auslass (3.4) und ein Teich-Auslass (3.3) ausgebildet sind, wobei in dem Gehäuse (3) im Filterbetrieb ein Strömungsweg von dem Wasser-Einlass (3.2) zum Teich-Auslass (3.3) ausgebildet ist und in dem Strömungsweg eine Filtereinrichtung (5) angeordnet ist, der eine Vorfiltereinheit (7) vorgeschaltet ist, die ein flächig ausgebildetes Filtersieb (7.1) umfasst,
**dadurch gekennzeichnet,**
**dass** das Filtersieb (7.1) parallel zur Querachse (X) und in einem Winkel zur Längsachse (Y) angeordnet ist, derart, dass das Filtersieb (7.1) ein bodennahes Ende (7.4) und ein bodenfernes Ende (7.3) aufweist, und dass das vom Wasser-Einlass (3.2) einströmende Wasser auf das bodenferne Ende (7.3) des Filtersiebes (7.1) auftrifft.

2. Teichfilter nach Anspruch 1,
**dadurch gekennzeichnet,**
**dass** die Vorfiltereinheit (7) eine Steuereinrichtung (7.8, 7.7, 7.9) aufweist, die zwischen dem Wasser-Einlass (3.2) und dem Filtersieb (7.1) im Strömungsweg angeordnet ist.

3. Teichfilter nach Anspruch 2,
**dadurch gekennzeichnet,**
**dass** die Steuereinrichtung (7.8, 7.7, 7.9) parallel zur Querachse (X) angeordnet ist und eine Strömungskammer (7.8) bildet, die wenigstens eine Austrittsöffnung (7.7) oberhalb des bodenfernen Endes (7.3) des Filtersiebes (7.1) aufweist, derart, dass einströmendes Wasser auf das ferne Ende des Filtersiebes (7.1) auftrifft und auf der schrägen Filterfläche in Richtung bodennahes Ende (7.4) fließt und in Abhängigkeit von der Schwerkraft durch Filteröffnungen (7.2) in dem Filtersieb (7.1) nach unten in die Filtereinheit (5) strömt.

4. Teichfilter nach Anspruch 3,
**dadurch gekennzeichnet,**
**dass** die Strömungskammer (7.8) wenigstens ein Umsteuerelement (7.9) aufweist, das jeweils einer Austrittsöffnung (7.7) zugeordnet ist.

5. Teichfilter nach einem der Ansprüche 1 bis 4,
**dadurch gekennzeichnet,**
**dass** das Filtersieb (7.1) in einer Richtung parallel zur Querachse (X) mehrteilig ausgebildet ist.

6. Teichfilter nach Anspruch 4 oder 5,
**dadurch gekennzeichnet,**
**dass** jede Austrittsöffnung (7.7) der Strömungskammer (7.8) einem Teil des mehrteiligen Filtersiebes (7.1) zugeordnet ist.

7. Teichfilter nach Anspruch 5 oder 6,
**dadurch gekennzeichnet,**
**dass** der Strömungsweg des einströmenden Wassers mit dem Umsteuerelement (7.9) auf ein oder mehrere Teile des Filtersiebes (7.1) umsteuerbar ist.

8. Teichfilter nach einem der Ansprüche 1 bis 7,
**dadurch gekennzeichnet,**
**dass** in Bezug zur Längsachse (Y) hinter dem bodennahen Ende (7.4) des Filtersiebes (7.1) ein Spülkanal (9) mit der Vorfiltereinheit (7) wirkverbunden ist.

9. Teichfilter nach Anspruch 8,
**dadurch gekennzeichnet,**
**dass** der Spülkanal (9) eine Eintrittsöffnung (9.1) aufweist, die im Filterbetrieb geschlossen ist und im Spülbetrieb geöffnet ist.

10. Teichfilter nach Anspruch 8 oder 9,
**dadurch gekennzeichnet,**
**dass** zwischen dem Spülkanal (9) und dem Filtersieb (7.1) eine Strömungsbarriere parallel zur Querachse (X) ausgebildet ist, die im Spülbetrieb von dem einströmenden Wasser überwindbar ist.

11. Teichfilter nach Anspruch 9 oder 10,
**dadurch gekennzeichnet,**
**dass** die Eintrittsöffnung (9.1) des Spülkanals (9) trichterförmig ausgebildet ist.

12. Teichfilter nach einem der vorstehenden Ansprüche 1 bis 11,
**dadurch gekennzeichnet,**
**dass** die Vorfiltereinheit (7) schwenkbar ausgebildet ist.

13. Teichfilter nach Anspruch 12,
**dadurch gekennzeichnet,**
**dass** die Vorfiltereinheit (7) um eine Schwenkachse (S) parallel zur Querachse (X) schwenkbar ist.

14. Teichfilter nach Anspruch 13,
**dadurch gekennzeichnet,**
**dass** die Schwenkachse (S) oberhalb des Spülkanals (9) angeordnet ist.

15. Teichfilter nach Anspruch 14,
**dadurch gekennzeichnet,**
**dass** die Vorfiltereinheit (7) zwischen einer im Wesentlichen horizontalen Position für den Filterbetrieb und einer im Wesentlichen vertikalen Position um die Schwenkachse (S) schwenkbar ist.

16. Teichfilter nach einem der Ansprüche 8 bis 15,
**dadurch gekennzeichnet,**
**dass** der Spülkanal (9) aus einer Wirkverbindung mit dem Kanal-Auslass (3.4) lösbar ist, derart, dass ein Strömungsweg des Wassers aus der Filtereinheit (5) in den Kanal-Auslass (3.4) entsteht, um eine Spülwirkung für die Filtereinheit (5) zu erzielen.

17. Teichfilter nach einem der vorstehenden Ansprüche,
**dadurch gekennzeichnet,**
**dass** die Filtereinheit (5) aus einer Mehrzahl von Filterpatronen (5.1) zusammengesetzt ist, die zu Reinigungszwecken komprimierbar ausgebildet sind.

18. Teichfilter nach einem der vorstehenden Ansprüche,
**dadurch gekennzeichnet,**
**dass** die Filtereinheit (5) wenigstens eine Zusatzpatrone (5.6) aufweist, die ein Filterhilfsmittel ausgewählt aus der Gruppe bestehend aus Kohle, Zeolith, Lava, Biokem enthält.

## Claims

1. Pond filter having a housing, which may be supported on a base face on a substrate, and which has a longitudinal axis (Y) and a transverse axis (X) and in whose housing wall a water inlet (3.2), a channel outlet (3.4) and a pond outlet (3.3) are formed, a flow path being formed in the housing (3) during filter operation from the water inlet (3.2) to the pond outlet (3.3) and a filter device (5) being placed in the flow path and comprising a preliminary filter unit (7), which comprises a plane filter screen (7.1), **characterised in that** the filter screen (7.1) is disposed parallel to the transverse axis (X) and at an angle to the longitudinal axis (Y) in such a manner that the filter screen (7.1) has an end (7.4) close to the base and an end (7.3) remote from the base, and **in that** the water flowing in from the water inlet (3.2) hits the end (7.3) of the filter screen (7.1) remote from the base.

2. Pond filter according to claim 1, **characterised in that** the preliminary filter unit (7) has a control (7.8, 7.7, 7.9) which is disposed in the flow path between the water inlet (3.2) and the filter screen (7.1).

3. Pond filter according to claim 2, **characterised in that** the control (7.8, 7.7, 7.9) is disposed parallel to the transverse axis (X) and forms a flow chamber (7.8), which has at least one outlet aperture (7.7) above the end (7.3) of the filter screen (7.1) remote from the base, in such a manner that in-flowing water hits the far end of the filter screen (7.1) and flows along the oblique filter face in the direction of the end (7.4) close to the base and flows down through filter apertures (7.2) in the filter screen (7.1) into the filter unit (5) according to gravity.

4. Pond filter according to claim 3, **characterised in that** the flow chamber (7.8) has at least one bypass element (7.9) which is respectively allocated to an outlet aperture (7.7).

5. Pond filter according to one of claims 1 to 4, **characterised in that** the filter screen (7.1) is formed in plural parts in a direction parallel to the transverse axis (X).

6. Pond filter according to claim 4 or 5, **characterised in that** each outlet aperture (7.7) of the flow chamber (7.8) is allocated to a part of the multipart filter screen (7.1).

7. Pond filter according to claim 5 or 6, **characterised in that** the flow path of the in-flowing water is bypassable with the bypass element (7.9) on to one or more parts of the filter screen (7.1).

8. Pond filter according to one of claims 1 to 7, **characterised in that** with respect to the longitudinal axis (Y), behind the end (7.4) of the filter screen (7.1) close to the base, a flushing channel (9) is actively connected to the preliminary filter unit (7).

9. Pond filter according to claim 8, **characterised in that** the flushing channel (9) has an inlet aperture (9.1), which is closed during filter operation and is open during flushing operation.

10. Pond filter according to claim 8 or 9, **characterised in that** between the flushing channel (9) and the filter screen (7.1), a flow barrier is formed parallel to the transverse axis (X), which may be overcome by the inflowing water during flushing operation.

11. Pond filter according to claim 9 or 10, **characterised in that** the inlet aperture (9.1) of the flushing channel (9) is funnel-shaped.

12. Pond filter according to one of claims 1 to 11, **characterised in that** the preliminary filter unit (7) is made pivotable.

13. Pond filter according to claim 12, **characterised in that** the preliminary filter unit (7) is pivotable about a pivotal axis (S) parallel to the transverse axis (X).

14. Pond filter according to claim 13, **characterised in that** the pivotal axis (S) is disposed above the flushing channel (9).

15. Pond filter according to claim 14, **characterised in that** the preliminary filter unit (7) is pivotable about the pivotal axis (S) between a substantially horizontal position for the filter operation and a substantially vertical position.

16. Pond filter according to one of claims 8 to 15, **characterised in that** the flushing channel (9) is detachable from an active connection to the channel outlet (3.4), in such a manner that a flow path of the water from the filter unit (5) is formed into the channel outlet (3.4) in order to achieve a flushing effect for the filter unit (5).

17. Pond filter according to one of the preceding claims, **characterised in that** the filter unit (5) is assembled from a plurality of filter cartridges (5.1), which are formed to be compressible for cleaning purposes.

18. Pond filter according to one of the preceding claims, **characterised in that** the filter unit (5) has at least one additional cartridge (5.6), which contains a filter agent selected from the group comprising carbon, zeolite, lava or BioKem.

## Revendications

1. Filtre pour pièce d'eau comprenant un boîtier, qui peut s'appuyer sur un fond par un côté de base, qui présente un axe longitudinal (Y) et un axe transversal (X) et dans la paroi de boîtier duquel sont réalisés une entrée d'eau (3.2), un canal de sortie (3.4) et une sortie de pièce d'eau (3.3), une voie d'écoulement depuis l'entrée d'eau (3.2) à la sortie de pièce d'eau (3.3) étant réalisée dans le boîtier (3) en mode de filtration et un dispositif de filtration (5) étant agencé dans la voie d'écoulement, en amont duquel est placée une unité de préfiltration (7), qui comprend un tamis de filtration (7.1) réalisé de façon plane,
**caractérisé en ce que**
le tamis de filtration (7.1) est agencé parallèlement à l'axe transversal (X) et sous un certain angle par rapport à l'axe longitudinal (Y), de façon telle que le tamis de filtration (7.1) présente une extrémité plus proche de la base (7.4) et une extrémité plus éloignée de la base (7.3), et **en ce que** l'eau affluant à partir de l'entrée d'eau (3.2) frappe l'extrémité plus éloignée de la base (7.3) du tamis de filtration (7.1).

2. Filtre pour pièce d'eau suivant la revendication 1,
**caractérisé en ce que**
l'unité de préfiltration (7) présente un dispositif de commande (7.8, 7.7, 7.9), qui est agencé dans la voie d'écoulement entre l'entrée d'eau (3.2) et le tamis de filtration (7.1).

3. Filtre pour pièce d'eau suivant la revendication 2,
**caractérisé en ce que**
le dispositif de commande (7.8, 7.7, 7.9) est agencé parallèlement à l'axe transversal (X) et forme une chambre d'écoulement (7.8), qui présente au moins un orifice de sortie (7.7) au-dessus de l'extrémité plus éloignée (7.3) de la base du tamis de filtration (7.1), de façon telle que de l'eau affluant frappe l'extrémité plus éloignée du tamis de filtration (7.1) et s'écoule en direction de l'extrémité plus proche de la base (7.4) sur la surface de filtration oblique et coule vers le bas dans l'unité de filtration (5) par des orifices de filtration (7.2) dans le tamis de filtration (7.1) en fonction de la force de gravité.

4. Filtre pour pièce d'eau suivant la revendication 3,
**caractérisé en ce que**
la chambre d'écoulement (7.8) présente au moins un élément de renvoi (7.9), qui est adjoint à chaque orifice de sortie (7.7).

5. Filtre pour pièce d'eau suivant l'une des revendications 1 à 4,
**caractérisé en ce que**
le tamis de filtration (7.1) est réalisé en plusieurs parties suivant une direction parallèle à l'axe transversal (X).

6. Filtre pour pièce d'eau suivant la revendication 4 ou 5,
**caractérisé en ce que**
chaque orifice de sortie (7.7) de la chambre d'écoulement (7.8) est adjoint à une partie du tamis de filtration en plusieurs parties (7.1).

7. Filtre pour pièce d'eau suivant la revendication 5 ou 6,
**caractérisé en ce que**
la voie d'écoulement de l'eau affluant peut être changée par l'élément de renvoi (7.9) sur une ou plusieurs parties du tamis de filtration (7.1).

8. Filtre pour pièce d'eau suivant l'une des revendications 1 à 7,
**caractérisé en ce que**
un canal à écoulement rapide (9) est relié activement à l'unité de préfiltration (7) derrière l'extrémité plus proche de la base (7.4) du tamis de filtration (7.1) par rapport à l'axe longitudinal (Y).

9. Filtre pour pièce d'eau suivant la revendication 8,
**caractérisé en ce que**
le canal à écoulement rapide (9) présente un orifice d'entrée (9.1), qui est fermé en mode de filtration et ouvert en mode de rinçage.

10. Filtre pour pièce d'eau suivant la revendication 8 ou 9,
**caractérisé en ce que**
entre le canal à écoulement rapide (9) et le tamis de filtration (7.1) est réalisée une barrière à écoulement parallèlement à l'axe transversal (X), qui est franchissable par l'eau affluant en mode de rinçage.

11. Filtre pour pièce d'eau suivant la revendication 9 ou 10,
**caractérisé en ce que**
l'orifice d'entrée (9.1) du canal à écoulement rapide (9) est réalisé sous forme d'entonnoir.

12. Filtre pour pièce d'eau suivant l'une des revendications précédentes 1 à 11,
**caractérisé en ce que**
l'unité de préfiltration est réalisée à pivotement.

13. Filtre pour pièce d'eau suivant la revendication 12,
**caractérisé en ce que**
l'unité de préfiltration (7) est pivotante autour d'un axe de pivotement (S) parallèlement à l'axe transversal (X).

14. Filtre pour pièce d'eau suivant la revendication 13,
**caractérisé en ce que**
l'axe de pivotement (S) est agencé au-dessus du canal à écoulement rapide (9).

15. Filtre pour pièce d'eau suivant la revendication 14,
**caractérisé en ce que**
l'unité de préfiltration (7) est pivotante autour de l'axe de pivotement (S) entre une position sensiblement horizontale pour le mode de filtration et une position sensiblement verticale.

16. Filtre pour pièce d'eau suivant l'une des revendications 8 à 15,
**caractérisé en ce que**
le canal à écoulement rapide (9) est libérable d'une liaison active avec le canal de sortie (3.4), de façon telle qu'il se forme une voie d'écoulement de l'eau à partir de l'unité de filtration (5) dans le canal de sortie (3.4), afin d'obtenir une action de rinçage pour l'unité de filtration (5).

17. Filtre pour pièce d'eau suivant l'une des revendications précédentes,
**caractérisé en ce que**
l'unité de filtration (5) est constituée de plusieurs cartouches de filtration (5.1), qui sont réalisées de façon comprimable à des fins de nettoyage.

18. Filtre pour pièce d'eau suivant l'une des revendications précédentes,
**caractérisé en ce que**
l'unité de filtration (5) présente au moins une cartouche d'appoint (5.6), qui contient un moyen de filtration auxiliaire sélectionné à partir du groupe constitué de charbon, zéolithe, lave, noyau biologique.
